# EUROPEAN PATENT SPECIFICATION

(11) **EP 1 486 554 B1**
(45) Date of publication and mention of the grant of the patent: **04.11.2009**
(21) Application number: 04253309.1
(22) Date of filing: 03.06.2004
(51) Int. Cl.: C10L 1/00, C10M 171/00

(54) **Method for marking hydrocarbons with substituted anthraquinones**
Verfahren zum Markieren von Kohlenwasserstoffen mit Anthrachinonen
Procédé de marquage des hydrocarbures avec des anthraquinones

(30) Priority: 13.06.2003 US 478375 P
(43) Date of publication of application: 15.12.2004
(73) Proprietor: ROHM AND HAAS COMPANY, Philadelphia, PA 19106-2399 (US)
(72) Inventor: Baxter, David Roderick, Mirfield, West Yorkshire WF14 DEX (GB); Cranmer, Peter John, Mirfield, West Yorkshire WF14 8PZ (GB); Ho, Kim Sang, Richboro, Pennsylvania 18954 (US)
(74) Representative: Buckley, Guy Julian

(56) References cited:
- EP-A- 0 481 519
- EP-A- 1 001 003
- EP-A- 1 426 434
- US-A- 2 727 045
- US-A- 3 164 449
- US-A- 4 455 253
- US-A- 4 755 012
- US-A- 5 525 516
- PATENT ABSTRACTS OF JAPAN vol. 2000, no. 12, 3 January 2001 (2001-01-03) & JP 2000 263953 A (MITSUI CHEMICALS INC), 26 September 2000 (2000-09-26)

## Description

### Background

This invention relates generally to a method for marking petroleum hydrocarbons with substituted anthraquinone compounds for subsequent identification.

1,4-bis-alkylamino-5,8-dihydroxyanthraquinones were disclosed in Japanese Pat. App. Ser. No. 2000-263953 for use in a thermal transfer recording method. This reference, however, does not suggest a method for marking petroleum hydrocarbons.

EP-A-1 426 434 discloses a method of marking liquid hydrocarbons using 1,4,5-triamine-8-hydroxy-anthraquinone; such compounds are now specifically excluded from the present invention.

EP-A-0 481 519 discloses a standard sample for use in an instrumental measurement of ASTM colour of a petroleum product with a photoelectric colorimeter, which comprises a mixed solution of dyes, which are intended to mark the composition.

EP-A-1 001 003 teaches a method for invisibly tagging petroleum products using anthraquinone dyes.

US-A-5 525 516 discloses a method of imparting invisible markings for the identification of petroleum hydrocarbons using certain infrared flurophores from the classes of squaraines, phthalocyanines and naphthalocyanines.

Finally, US-A-4 755 012 discloses that tetraamino-anthraquinones possess a strong absorbance in the range 750-800 nm.

A variety of dyes has been used to mark petroleum hydrocarbons. Some of these are expensive, difficult to prepare, or unstable. Combinations of dyes can be used as digital marking systems, with the ratios of amounts forming a code for the marked product. Additional compounds useful as petroleum markers would be desirable to maximize the available codes. The problem addressed by this invention is to find additional markers useful for marking petroleum hydrocarbons.

### Statement of Invention

The present invention is directed to a method for marking a liquid petroleum hydrocarbon. The method comprises adding to the liquid petroleum hydrocarbon at least one substituted anthraquinone dye having formula (I) 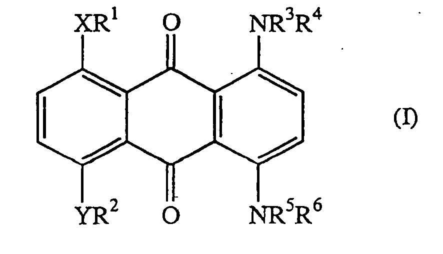 wherein X is O or S; Y is O, NR⁷ or S; R¹ and R² independently are hydrogen, alkyl, aryl, aralkyl, heteroalkyl, heterocyclic or alkanoyl; R³ and R⁵ independently are alkyl, aryl, aralkyl, heteroalkyl or heterocyclic; R⁴ and R⁶ independently are hydrogen or alkyl; R⁷ is hydrogen or alkyl; and wherein the substituted anthraquinone dye(s) has an absorption maximum in the range from 600 nm to 750 nm and further wherein the amount of said at least one substituted anthraquinone dye is less than 2 ppm.

### Detailed Description

All percentages are weight percentages, unless otherwise indicated. Concentrations in parts per million ("ppm") are calculated on a weight/volume basis. When a solvent is not specified for measurement of an absorption maximum, a hydrocarbon solvent is preferred. Extinction values are determined by measuring absorption in absorbance units ("AU") with a 1 cm path length on 10 mg/L solutions. The term "petroleum hydrocarbons" refers to products having a predominantly hydrocarbon composition, although they may contain minor amounts of oxygen, nitrogen, sulfur or phosphorus; petroleum hydrocarbons are derived from petroleum refining processes; they include, for example, lubricating oil, hydraulic fluid, brake fluid, gasoline, diesel fuel, kerosene, jet fuel and heating oil. An "alkyl" group is a hydrocarbyl group having from one to twenty carbon atoms in a linear, branched or cyclic arrangement. Substitution on alkyl groups of one or more halo, hydroxy or alkoxy groups is permitted; alkoxy groups may in turn be substituted by one or more halo substituents. Preferably, alkyl groups have no halo or alkoxy substituents, and most preferably, alkyl groups are saturated and unsubstituted. A "heteroalkyl" group is an alkyl group in which at least one carbon has been replaced by O, NR, or S, wherein R is hydrogen, alkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. Substitution on aryl or heterocyclic groups of one or more of the following groups: halo, cyano, nitro, hydroxy, alkoxy, alkyl, heteroalkyl, alkanoyl, amino, or amino substituted by one or more of alkyl, aryl, aralkyl, heterocyclic, heteroalkyl or alkanoyl is permitted, with substitution by one or more halo groups being possible on alkyl, heteroalkyl, alkanoyl or alkoxy groups. Preferably, aryl and heterocyclic groups do not contain halogen atoms. In one preferred embodiment of the invention, aryl and heterocyclic groups are unsubstituted or substituted only by alkyl groups. An "aromatic heterocyclic" group is a heterocyclic group derived from an aromatic heterocyclic compound.

In an preferred embodiment of the invention, Y is O or S. Preferably, X and Y represent the same heteroatom. Preferably, R¹ and R² represent the same group. Preferably, R³ and R⁵ represent the same group.

In one embodiment of the invention, R⁴ and R⁶ are hydrogen; in another embodiment, R⁴ and R⁶ are alkyl, preferably C₁-C₄ saturated unsubstituted acyclic alkyl. In one embodiment of the invention, R³ and R⁵ in formula (I) are alkyl, aryl or aromatic heterocyclic. Preferably, R³ and R⁵ represent the same substituent. In one embodiment of the invention, R³ and R⁵ are aryl substituted by at least one C₂-C₂₀ alkyl group or aromatic heterocyclic substituted by at least one C₂-C₂₀ alkyl group; alternatively, R³ and R⁵ are aryl substituted by at least one C₄-C₂₀ alkyl group or aromatic heterocyclic substituted by at least one C₄-C₂₀ alkyl group; in one embodiment R³ and R⁵ are phenyl substituted by at least one C₂-C₂₀ alkyl group, or alternatively by at least one C₄-C₂₀ alkyl group. When R³ and R⁵ are aryl or aromatic heterocyclic groups, preferably R⁴ and R⁶ are hydrogen.

In one embodiment of the invention, at least two of R¹, R², R³, R⁴, R⁵, R⁶ and R⁷ contain at least four saturated carbon atoms each. The aforementioned groups may be aliphatic groups with at least four saturated carbons; or aromatic groups with aliphatic substituents that have at least four saturated carbons. In one embodiment, R¹ and R² are hydrogen, alkyl or alkanoyl; R⁴ and R⁶ are hydrogen; X and Y are O; and at least two of R¹, R², R³ and R⁵ contain at least four saturated carbon atoms each. In one embodiment, R⁴ and R⁶ are hydrogen; and R³ and R⁵ are C₄-C₂₀ alkyl groups, preferably saturated unsubstituted alkyl.

In one embodiment of the invention, R³ and R⁵ are alkyl, preferably C₂-C₂₀ alkyl, more preferably C₄-C₂₀ alkyl; preferably R³ and R⁵ are saturated unsubstituted alkyl; preferably R³ and R⁵ are acyclic alkyl. In this embodiment, preferably X and Y are O, and R¹ and R² are hydrogen, alkyl or alkanoyl. In another embodiment of the invention, R³ and R⁵ are C₅-C₈ cyclic alkyl groups; preferably R³ and R⁵ are saturated unsubstituted C₅-C₈ cyclic alkyl groups and R⁴ and R⁶ are hydrogen. In one preferred embodiment, R³ and R⁵ are cyclohexyl. In another preferred embodiment, R³ and R⁵ are C₅-C₈ cyclic alkyl groups, X and Y are O, and R¹, R², R⁴ and R⁶ are hydrogen.

In one embodiment of the invention, Y is NR⁷. In this embodiment, preferably R⁴, R⁶ and R⁷ are hydrogen; and R³, R⁵ and R² are alkyl, preferably C₂-C₂₀ alkyl, more preferably C₄-C₂₀ alkyl; preferably R³, R⁵ and R² are saturated unsubstituted alkyl; preferably R³, R⁵ and R² are acyclic alkyl. R³, R⁵ and R² alternatively can be C₅-C₈ cyclic alkyl, more preferably saturated unsubstituted C₅-C₈ cyclic alkyl, preferably cyclohexyl. Preferably, X is O and R¹ is hydrogen, alkyl or alkanoyl; most preferably hydrogen.

In one preferred embodiment of the invention, X and Y are O, and a substituted anthraquinone dye has formula (II) 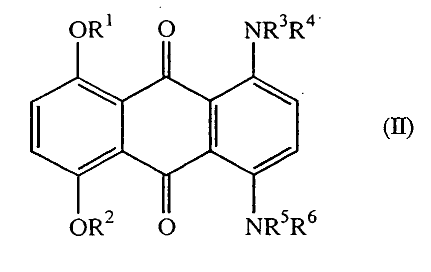 In this embodiment, preferably R¹ and R² independently are hydrogen, alkyl or alkanoyl. Preferably, R¹ and R² represent the same group, and R³ and R⁵ represent the same group. Preferably R⁴ and R⁶ are hydrogen.

The absorption maxima, λₘₐₓ, of several substituted anthraquinone dyes of formula (I), measured in xylene, are provided in the following table. For all of the dyes listed, R⁴ and R⁶ are hydrogen.

| X, Y | R¹, R² | R³, R⁵ | λₘₐₓ, nm |
|---|---|---|---|
| O, O | H, H | 2-ethylhexyl, 2-ethylhexyl | 692 |
| O, O | H, H | 4-n-butylphenyl, 4-n-butylphenyl | 690 |

Preferably the amount of each substituted anthraquinone dye of formula (I) added to the petroleum hydrocarbon is at least 0.001 ppm, more preferably at least 0.005 ppm, more preferably at least 0.01 ppm, more preferably at least 0.03 ppm, and most preferably at least 0.05 ppm. The amount of each dye is less than 2 ppm, more preferably less than 1 ppm and most preferably less than 0.5 ppm. Preferably, the marking is invisible, i.e., the dye cannot be detected by simple visual observation of the marked hydrocarbon. Preferably, a substituted anthraquinone of formula (I) has an absorption maximum in a hydrocarbon solvent of at least 620 nm, more preferably at least 640 nm, more preferably at least 660 nm, and most preferably at least 670 nm. Preferably, a substituted anthraquinone of formula (I) has an absorption maximum in a hydrocarbon solvent of no more than 730 nm, more preferably no more than 710 nm, and most preferably no more than 700 nm.

In one embodiment of the invention, at least one other dye, not having formula (I), and having an absorption maximum from 690 nm to 1000 nm, but at a wavelength different from that of the substituted anthraquinone of formula (I) is added to the petroleum hydrocarbon. Preferably, the absorption maxima of any two dyes used in the method of this invention, when measured in the same solvent, differ by at least 30 nm, more preferably by at least 50 nm. Preferably, the other dye(s) used in this embodiment has an absorption maximum in a hydrocarbon solvent of at least 700 nm, more preferably at least 710 nm, more preferably at least 720 nm, more preferably at least 740 nm, and most preferably at least 770 nm. Preferably, the other dye(s) has an absorption maximum in a hydrocarbon solvent of no more than 900 nm, more preferably no more than 850 nm, and most preferably no more than 800 nm. In this embodiment of the invention, preferably the other dye(s) is at least one 1,4,5,8-tetrasubstituted anthraquinone dye having formula (III) 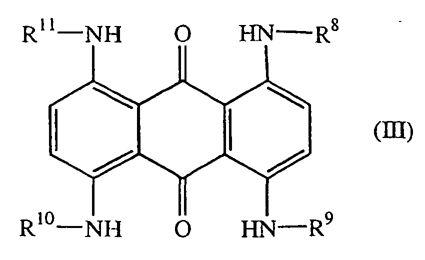 wherein R⁸, R⁹, R¹⁰ and R¹¹ independently are alkyl, aryl, aralkyl, heteroalkyl or heterocyclic. In one embodiment of the invention, at least three of R⁸, R⁹, R¹⁰ and R¹¹ are aryl or aromatic heterocyclic; preferably, all of R⁸, R⁹, R¹⁰ and R¹¹ are aryl. Preferably, R⁸, R⁹, R¹⁰ and R¹¹ represent the same substituent. In one preferred embodiment of the invention, R⁸, R⁹, R¹⁰ and R¹¹ are aryl substituted by at least one C₂-C₂₀ alkyl group or aromatic heterocyclic substituted by at least one C₂-C₂₀ alkyl group, preferably aryl substituted by at least one C₄-C₂₀ alkyl group or aromatic heterocyclic substituted by at least one C₄-C₂₀ alkyl group; preferably R⁸, R⁹, R¹⁰ and R¹¹ are phenyl substituted by at least one C₂-C₂₀ alkyl group, more preferably by at least one C₄-C₂₀ alkyl group. In one embodiment of the invention, R⁸, R⁹, R¹⁰ and R¹¹ are C₅-C₈ cyclic alkyl, preferably cyclohexyl. In another embodiment, R⁸, R⁹, R¹⁰ and R¹¹ are unsubstituted saturated acyclic alkyl, preferably C₂-C₂₀ unsubstituted saturated acyclic alkyl. Preferably the amount of each 1,4,5,8-tetrasubstituted anthraquinone dye added to the petroleum hydrocarbon is at least 0.01 ppm, more preferably at least 0.02 ppm, and most preferably at least 0.03 ppm. The amount of each dye is less than 2 ppm, and most preferably less than 1 ppm.

Another dye suitable for use with a dye of formula (I) is a substituted anthraquinone dye having formula (IV) 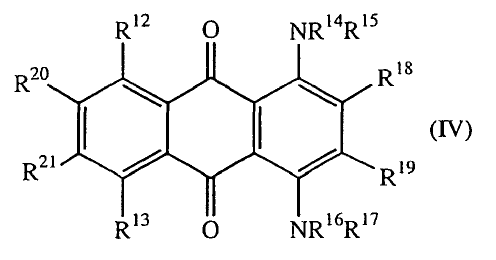 wherein R¹² and R¹³ independently are hydrogen, hydroxy, OR²², amino or NR²²R²³; R¹⁴ and R¹⁶ independently are alkyl, aryl, aralkyl, heteroalkyl or heterocyclic; R¹⁵ and R¹⁷ independently are hydrogen or alkyl; R¹⁸, R¹⁹, R²⁰ and R²¹ independently are cyano, nitro or hydrogen, provided that at least two of R¹⁸, R¹⁹, R²⁰ and R²¹ are cyano or nitro; R²² is alkyl, aryl, aralkyl, heteroalkyl, heterocyclic or alkanoyl; R²³ is hydrogen or alkyl; and wherein the substituted anthraquinone dye(s) has an absorption maximum in the range from 690 nm to 1000 nm. Preferably, R¹⁸, R¹⁹, R²⁰ and R²¹ independently are cyano or hydrogen.

In one embodiment of the invention, R¹⁵ and R¹⁷ are hydrogen; in another embodiment, R¹⁵ and R¹⁷ are alkyl, preferably C₁-C₄ saturated unsubstituted acyclic alkyl. In one embodiment of the invention, R¹⁴, R¹⁶ and R²² in formula (IV) are alkyl, aryl or aromatic heterocyclic. Preferably, R¹⁴ and R¹⁶ represent the same substituent. In one embodiment of the invention, R¹⁴ and R¹⁶ are aryl substituted by at least one C₂-C₂₀ alkyl group or aromatic heterocyclic substituted by at least one C₂-C₂₀ alkyl group; alternatively, R¹⁴ and R¹⁶ are aryl substituted by at least one C₄-C₂₀ alkyl group or aromatic heterocyclic substituted by at least one C₄-C₂₀ alkyl group; preferably R¹⁴ and R¹⁶ are phenyl substituted by at least one C₂-C₂₀ alkyl group, more preferably by at least one C₄-C₂₀ alkyl group. When R¹⁴ and R¹⁶ are aryl or aromatic heterocyclic groups, preferably R¹⁵ and R¹⁷ are hydrogen.

In one embodiment of the invention, R¹⁴ and R¹⁶ are alkyl, preferably C₂-C₂₀ alkyl, more preferably C₄-C₂₀ alkyl; preferably R¹⁴ and R¹⁶ are saturated unsubstituted alkyl. In one embodiment of the invention, R¹⁴ and R¹⁶ are C₅-C₈ cyclic alkyl groups; preferably R¹⁴ and R¹⁶ are saturated unsubstituted C₅-C₈ cyclic alkyl groups and R¹⁵ and R¹⁷ are hydrogen. In one preferred embodiment, R¹⁴ and R¹⁶ are cyclohexyl. In another preferred embodiment, R¹⁴ and R¹⁶ are C₅-C₈ cyclic alkyl groups, R¹⁵ and R¹⁷ are hydrogen, and R¹² and R13 are NR²²R²³, where R²³ is hydrogen and R²² is C₅-C₈ cyclic alkyl, preferably saturated unsubstituted alkyl; preferably R¹⁴ and R¹⁶ are cyclohexyl and R¹² and R¹³ are cyclohexylamino.

Another dye suitable for use with a dye of formula (I) is an anthraquinone imine having formula (V) 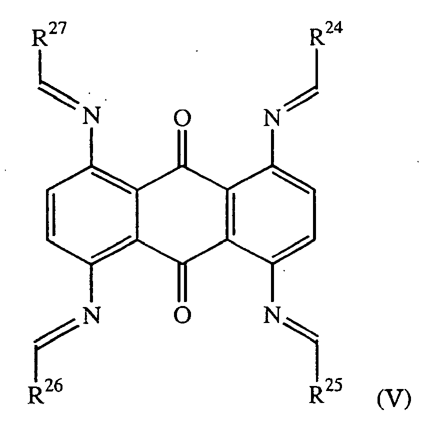 wherein R²⁴, R²⁵, R²⁶ and R²⁷ independently are aryl or aromatic heterocyclic. Preferably, R²⁴, R²⁵, R²⁶ and R²⁷ are the same aryl or aromatic heterocyclic group. Preferably, R²⁴, R²⁵, R²⁶ and R²⁷ are aryl; more preferably R²⁴, R²⁵, R²⁶ and R²⁷ are phenyl or substituted phenyl; and most preferably phenyl or phenyl substituted by one or more of hydroxy, alkyl, alkanoyl, aroyl, aryloxy, aralkyloxy and alkoxy. In one preferred embodiment, R²⁴, R²⁵, R²⁶ and R²⁷ are phenyl substituted by at least one alkyl group, preferably a C₂-C₂₀ alkyl group, more preferably a saturated, unsubstituted C₄-C₂₀ alkyl group. Compounds of formula (V) can be prepared from condensation of 1,4,5,8-tetraaminoanthraquinone and aryl aldehydes or aromatic heterocyclic aldehydes.

Another dye suitable for use with a dye of formula (I) is a dye of formula (VI). 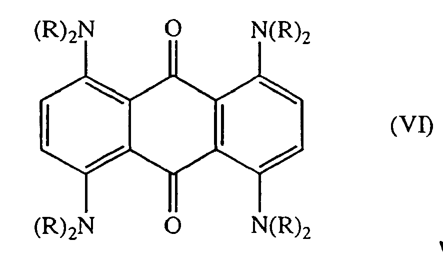 wherein R represents alkyl groups, which may be the same or different. In one embodiment, R is C₁-C₁₂ alkyl, preferably C₁-C₄ alkyl. In one embodiment, R is saturated C₁-C₁₂ alkyl, preferably unsubstituted alkyl. In one embodiment Ris C₁-C₄ saturated unsubstituted acyclic alkyl. Preferably, all R groups are the same alkyl group. Most preferably, all R groups are methyl groups. Preferably the amount of each dye of formula (VI) added to the petroleum hydrocarbon is at least 0.01 ppm, more preferably at least 0.02 ppm, and most preferably at least 0.03 ppm. Preferably the amount of each dye of formula (VI) is less than 10 ppm, more preferably less than 2 ppm, and most preferably less than 1 ppm.

In one embodiment of the invention, at least one dye having an absorption maximum in a hydrocarbon solvent in the range from 630 nm to 720 nm, more preferably from 630 nm to 700 nm, and most preferably from 650 nm to 700 nm, is added to the petroleum hydrocarbon together with a dye of formula (I). Preferably, the dye(s) is a 1,4,5-trisubstituted anthraquinone dye of formula (VII). 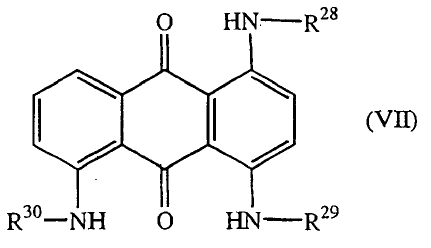 wherein R²⁸, R²⁹ and R³⁰ independently are alkyl, aryl, aralkyl, heteroalkyl or heterocyclic. Preferably, at least two of R²⁸, R²⁹ and R³⁰ are aryl or aromatic heterocyclic. More preferably, all three of R²⁸, R²⁹ and R³⁰ are aryl or aromatic heterocyclic. Most preferably, all three of R²⁸, R²⁹ and R³⁰ are aryl. Preferably, R²⁸, R²⁹ and R³⁰ represent the same substituent. In one preferred embodiment of the invention, R²⁸, R²⁹ and R³⁰ are aryl substituted by at least one C₂-C₂₀ alkyl group or aromatic heterocyclic substituted by at least one C₂-C₂₀ alkyl group; aryl substituted by at least one C₄-C₂₀ alkyl group or aromatic heterocyclic substituted by at least one C₄-C₂₀ alkyl group; preferably R²⁸, R²⁹ and R³⁰ are phenyl substituted by at least one C₂-C₂₀ alkyl group, more preferably by at least one C₄-C₂₀ alkyl group. 1,4,5-trisubstituted anthraquinones can be prepared from commercially available 1,4,5-trichloroanthraquinone, whose preparation is reported in the prior art (see U.S. Pat. Nos. 4,006,171 and 4,162,946).

In one preferred embodiment of the invention, a substituted anthraquinone dye of formula (I), a 1,4,5,8-tetrasubstituted anthraquinone dye having formula (III), and a substituted anthraquinone dye of formula (IV) are added to a petroleum hydrocarbon to comprise a coding system enabling identification of the hydrocarbon according to the relative amounts of the three types of dyes, provided that the absorption maxima, measured in the same solvent, for any pair of dyes are separated by at least 30 nm. In this embodiment, preferably the substituted anthraquinone dye of formula (I) has an absorption maximum in a hydrocarbon solvent from 650 nm to 700 nm, the 1,4,5,8-tetrasubstituted anthraquinone dye having formula (III) has an absorption maximum in a hydrocarbon solvent from 720 nm to 770 nm, and the substituted anthraquinone dye of formula (IV) has an absorption maximum in a hydrocarbon solvent from 780 nm to 900 nm.

Preferably, the dyes are detected by exposing the marked hydrocarbon to electromagnetic radiation having wavelengths in the portion of the spectrum containing the absorption maxima of the dyes and detecting the absorption of light or fluorescent emissions. It is preferred that the detection equipment is capable of calculating dye concentrations and concentration ratios in a marked hydrocarbon. Typical spectrophotometers known in the art are capable of detecting the dyes used in the method of this invention when they are present at a level of at least 0.01 ppm. It is preferred to use the detectors described in U.S. Pat. No. 5,225,679, especially the SpecTrace^{TM} analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked hydrocarbon, the sample may be returned to its source after testing, eliminating the need for handling and disposal of hazardous chemicals. This is the case, for example, when the dyes are detected simply by measuring light absorption by a sample of the marked hydrocarbon.

In one embodiment of the invention, the dye is formulated in a solvent to facilitate its addition to the liquid hydrocarbon. The preferred solvents for substituted anthraquinone dyes are N-methylpyrrolidinone, N,N-dimethyl propylene urea, nitrobenzene, toluene, N,N-dimethylformamide and 2-sec-butylphenol. Preferably, the dye is present in the solvent at a concentration of from 0.1% to 10%.

In one embodiment of the invention, at least one substituted anthraquinone dye of formula (I) having an absorption maximum from 600 nm to 720 nm, and optionally another dye having an absorption maximum from 690 nm to 1000 nm, are added to a petroleum hydrocarbon with at least one visible dye; i.e., a dye having an absorption maximum in the range from 500 nm to 700 nm, preferably from 550 nm to 700 nm, and most preferably from 550 nm to 650 nm. Preferably, each visible dye is added in an amount of at least 0.1 ppm, preferably at least 0.2 ppm, and most preferably at least 0.5 ppm. Preferably, the amount of each visible dye is no more than 10 ppm, more preferably no more than 5 ppm, more preferably no more than 3 ppm, and most preferably no more than 2 ppm. In a preferred embodiment, the visible dyes are selected from the classes of anthraquinone dyes and azo dyes. Suitable anthraquinone dyes having an absorption maximum in this region include, for example, 1,4-disubstituted anthraquinones having alkylamino, arylamino or aromatic-heterocyclic-amino substituents at the 1 and 4 positions. Suitable azo dyes having an absorption maximum in this region include the bisazo dyes, for example, those having the structure Ar-N=N-Ar-N=N-Ar, in which Ar is an aryl group, and each Ar may be different. Specific examples of suitable commercial anthraquinone and bisazo dyes having an absorption maximum in this region are listed in the Colour Index, including C.I. Solvent Blue 98, C.I. Solvent Blue 79, C.I. Solvent Blue 99 and C.I. Solvent Blue 100.

Incorporation of at least one substituted anthraquinone dye of formula (I) having an absorption maximum in the region from 600 nm to 720 nm allows identification of the liquid hydrocarbon by spectrophotometric means in a spectral region relatively free of interference. Low levels of these dyes are detectable in this region, allowing for a cost-effective marking process, and availability of multiple dyes allows coding of information via the amounts and ratios of the dyes. For these reasons, additional compounds absorbing in this range, and suitable as fuel markers, are extremely useful.

Combinations of substituted anthraquinone dyes of formula (I) having absorption maxima in the region from 600 nm to 720 nm with markers detectable in the region from 500 nm to 700 nm also are useful. Incorporation of higher levels of at least one visible dye having an absorption maximum in the region from 500 nm to 700 nm, preferably from 550 nm to 650 nm, facilitates quantitative spectrophotometric determination in this region. Accurate determination of the dye levels allows the amounts and ratios of the dyes to serve as parts of a code identifying the hydrocarbon. Since dyes absorbing from 550 nm to 650 nm often are less costly, use of a higher level will not greatly increase the overall cost of the marking process. Thus, the combination of the two kinds of dyes increases the flexibility and minimizes the cost of the marking process.

### Examples

### Example 1: Synthesis of 1,4-di-(2-ethylhexylamino)-5,8-dihydroxyanthraquinone.

A mixture of leuco-1,4,5,8-tetrahydroxyanthraquinone (5.91 g), sodium dithionite (1.09 g) and 1-hexanol (175.2 g) was stirred while adding 2-ethylhexylamine (24.08 g). The mixture was heated to reflux (148-152°C), maintained at reflux for 6-6.5 hours, and then cooled to ambient temperature. The precipitate was collected and washed thoroughly with methanol and water, and dried. The yield of dried isolated product was 7.0 g. Approximately another 1.9 g was present in the mother liquor, for a total yield of 8.9 g (90%). This material has a maximum absorption band (λₘₐₓ) at a wavelength of 692 nm in xylene, or 688 nm in cyclohexane, with an extinction value of 0.640 AU in xylene and 0.660 AU in cyclohexane for a 10 mg/L solution. The solubility of the title compound in xylene is approximately 20%.

### Example 2: Synthesis of 1,4-di-(n-butylamino)-2,3-dicyanoanthraquinone.

A mixture of 25.7 parts of Solvent Blue 35 {1,4- di-(n-butylamino)-anthraquinone}, 14.8 parts of NaCN, 10 parts of NH₄HCO₃, and 100 parts of dimethyl sulfoxide (DMSO) was allowed to react at 90-95°C for 6 hours to give 1,4-di-(n-butylamino)-2,3-dicyanoanthraquinone. This material has a maximum absorption band (λₘₐₓ) at a wavelength of 700 nm in xylene with an extinction value of 0.23 AU for 10 mg/L.

### Example 3 : Synthesis of 1,4,5,8-tetra-(4'-n-butylphenylamino)-2,3-dicyanoanthraquinone and 1,4,5,8 -tetra(4'-n-butylphenylamino)-2,3,6,7-tetracyanoanthraquinone.

A mixture of 8.0 parts of 1,4,5,8 -tetra(4'-n-butylphenylamino)-anthraquinone, 2.53 parts of NaCN, 1.65 parts of NH₄HCO₃, and 39 parts of DMSO was allowed to react at 90-95°C for 6 hours to give 1,4,5,8-tetra-(4'-n-butylphenylamino)-2,3-dicyanoanthraquinone. The structure of the di-cyano product was confirmed by proton and carbon-13 NMR. This material has a maximum absorption band (λₘₐₓ) at a wavelength of 835 nm in xylene with an extinction value of 0.342 AU for 10 mg/L. Longer reaction time also gave rise to the 1,4,5,8 -tetra(4'-n-butylphenylamino)-2,3,6,7-tetracyanoanthraquinone. The structure of the tetra-cyano product also was confirmed by proton and carbon-13 NMR. This material has a maximum absorption band (λₘₐₓ) at a wavelength of 900 nm in xylene with an extinction value of 0.19 AU for 10 mg/L.

### Example 4: Synthesis of 1,4,5-tri(4-n-butylphenylamino)anthraquinone.

A mixture of 10 parts of 1,4,5-trichloroanthraquinone and 95 parts of 4-n-butylaniline was allowed to react at 190°C for 12 hours. The reaction mixture was then cooled to 70°C and diluted with an equal amount of ethanol. On standing and further cooling to ambient temperature, some precipitate is formed. The precipitate was filtered, washed, and recrystallized from a mixture of xylenes and 2-propanol to give 6 parts of a dark blue crystalline material (>95% purity) with the structure confirmed by mass spectrometry as the desired product of 1,4,5-tri(4-n-butylphenylamino)-anthraquinone. This material has a maximum absorption band (λₘₐₓ) at a wavelength of 675 nm in toluene.

### Example 5: Synthesis of 1,4,5,8-tetra(phenylamino)anthraquinone

A mixture of 10.87 g of 1,4,5,8-tetrachloroanthraquinone, 50 g of aniline, 13.4 g of potassium acetate, 1.24 g of copper sulfate, and 3.41 g of benzyl alcohol was heated to 130 °C under nitrogen and maintained at this temperature for 6.5 hours, followed by another holding period at 170 °C for 6 hours. The reaction mixture was cooled to ambient temperature and the precipitate was filtered to give black solids. Recrystallization of the crude product from toluene afforded 6.0 g of a dark green crystalline material (> 95% purity with the structure confirmed by proton NMR as the desired product: 1,4,5,8-tetra(phenylamino)anthraquinone. This material had a maximum absorption band (λₘₐₓ) at a wavelength of 750 nm in toluene. The molar extinction coefficient (ε) was determined to be -30,500.

### Example 6: Synthesis of 1,4,5,8-tetra(4-n-butylphenylamino)anthraquinone

A mixture of 10.87 g of 1,4,5,8-tetrachloroanthraquinone and 95 g of 4-n-butylaniline was allowed to react at 190 °C for 12 hours. The reaction mixture was then cooled to 70 °C and diluted with an equal amount of ethanol. On standing and further cooling to ambient temperature, some precipitate was formed. The mixture was filtered, washed and recrystallized from xylenes/isopropanol to give 6.6 g of a dark green crystalline material (>95% purity) with the structure confirmed by proton NMR as the desired product of 1,4,5,8-tetra(4-n-butylphenylamino)anthraquinone. This material had a maximum absorption band (λₘₐₓ) at a wavelength of 762 nm in toluene. The molar extinction coefficient (ε) was determined to be ~36,900.

## Claims

1. A method for marking a liquid petroleum hydrocarbon; said method comprising adding to said liquid petroleum hydrocarbon at least one anthraquinone dye having formula (I) 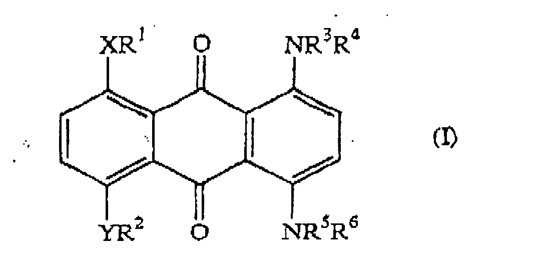 wherein X is O or S; Y is O, NR⁷ or S; R¹ and R² independently are hydrogen, alkyl, aryl, aralkyl, heteroalkyl, heterocyclic or alkanoyl; R³ and R⁵ independently are alkyl, aryl, aralkyl, heteroalkyl or heterocyclic; R⁴ and R⁶ independently are hydrogen or alkyl; R⁷ is hydrogen or alkyl; wherein said at least one substituted anthraquinone dye is not a 1,4,5,8-tetrasubstituted anthraquinone dye of the formula and wherein said at least one substituted anthraquinone dye has an absorption maximum in the range from 600 nm to 750 nm and further wherein the amount of said at least one substituted anthraquinone dye is less than 2 ppm.

2. The method of claim 1 in which X and Y are O, and said at least one substituted anthraquinone dye has an absorption maximum in the range from 650 nm to 710 nm.

3. The method of claim 2 in which R¹ and R² are hydrogen, alkyl or alkanoyl; R⁴ and R⁶ are hydrogen; and at least two of R¹, R², R³ and R⁵ contain at least four saturated carbon atoms each.

4. The method of claim 3 in which R¹ and R² are hydrogen, and R³ and R⁵ are C₄-C₂₀ alkyl. 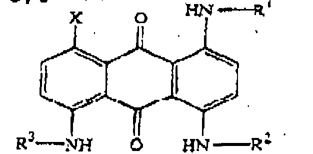 in which X is OH; and R¹, R², R³ independently are alkyl, aryl, aralkyl, heteroalkyl or heterocyclic;

5. The method of claim 1 further comprising at least one 1,4,5,8-tetrasubstituted anthraquinone dye having an absorption maximum from 720 nm to 850 nm and having formula (III) 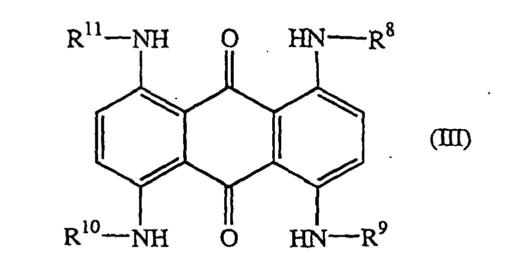 wherein R⁸, R⁹, R¹⁰ and R¹¹ independently are alkyl, aryl, aralkyl, heteroalkyl or heterocyclic.

6. The method of claim 5 in which each dye is present in an amount from 0.01 ppm to 2 ppm.

7. The method of claim 6 in which R⁸, R⁹, R¹⁰ and R¹¹ independently are aryl or aromatic heterocyclic substituted by at least one C₄-C₂₀ alkyl group.

8. The method of claim 5 further comprising at least one substituted anthraquinone dye having formula (IV) 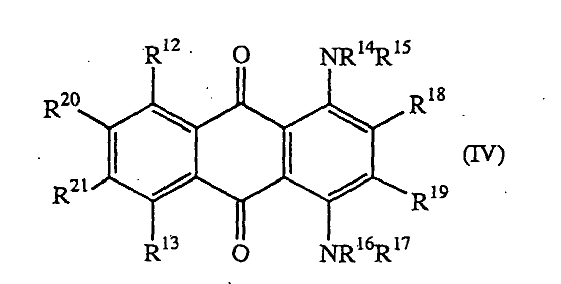 wherein R¹² and R¹³ independently are hydrogen, hydroxy, OR²², amino or NR²²R²³; R¹⁴ and R¹⁶ independently are alkyl, aryl, aralkyl, heteroalkyl or heterocyclic; R¹⁵ and R¹⁷ independently are hydrogen or alkyl; R¹⁸, R¹⁹, R²⁰ and R²¹ independently are cyano, nitro or hydrogen, provided that at least two of R¹⁸, R¹⁹, R²⁰ and R²¹ are cyano or nitro; R²² is alkyl, aryl, aralkyl, heteroalkyl, heterocyclic or alkanoyl; R²³ is hydrogen or alkyl; and wherein said at least one substituted anthraquinone dye has an absorption maximum in the range from 780 nm to 900 nm.

9. The method of claim 8 in which R¹⁸, R¹⁹, R²⁰ and R²¹ independently are cyano or hydrogen; R¹² and R¹³ represent hydrogen, hydroxy or NR²²R²³; and R¹⁴ and R¹⁶ are C₅-C₈ cyclic alkyl, unsubstituted saturated acyclic alkyl, aryl substituted by at least one C₂-C₂₀ alkyl group, or aromatic heterocyclic substituted by at least one C₂-C₂₀ alkyl group.

10. The method of claim 1 in which said at least one anthraquinone dye has an absorption maximum in the range from 640 nm to 700 nm, and further comprising at least one dye having an absorption maximum from 550 nm to 650 nm.

## Patentansprüche

1. Verfahren zum Markieren eines flüssigen Petroleumkohlenwasserstoffs, wobei das Verfahren das Zugeben von mindestens einem Anthrachinonfarbstoff mit der Formel (I) 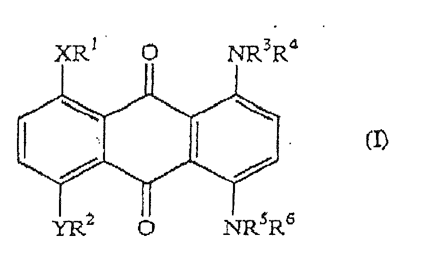 worin X O oder S ist, Y O, NR⁷ oder S ist, R¹ und R², unabhängig voneinander, Wasserstoff, Alkyl, Aryl, Aralkyl, Heteroalkyl, Heterocyclus oder Alkanoyl ist, R³ und R⁵, unabhängig voneinander, Alkyl, Aryl, Aralkyl, Heteroalkyl oder Heterocyclus sind, R⁴ und R⁶, unabhängig voneinander, Wasserstoff oder Alkyl sind, R⁷ Wasserstoff oder Alkyl ist, wobei der mindestens eine substituierte Anthrachinonfarbstoff nicht ein 1,4,5,8-tetrasubstituierter Anthrachinonfarbstoff der Formel ist, 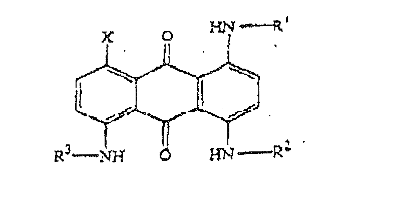 worin X OH ist, und R¹, R², R³, unabhängig voneinander, Alkyl, Aryl, Aralkyl, Heteroalkyl oder Heterocyclus sind,
und wobei der mindestens eine substituierte Anthrachinonfarbstoff ein Absorptionsmaximum in dem Bereich von 600 nm bis 750 nm aufweist, und wobei weiter die Menge des mindestens einen substituierten Anthrachinonfarbstoffs weniger als 2 ppm ist, zu dem flüssigen Petroleumkohlenwasserstoff umfasst.

2. Verfahren gemäß Anspruch 1, worin X und Y O sind und der mindestens eine substituierte Anthrachinonfarbstoff ein Absorptionsmaximum in dem Bereich von 650 nm bis 710 nm aufweist.

3. Verfahren gemäß Anspruch 2, worin R¹ und R² Wasserstoff, Alkyl oder Alkanoyl sind, R⁴ und R⁶ Wasserstoff sind, und mindestens zwei von R¹, R², R³ und R⁵ jeweils mindestens vier gesättigte Kohlenwasserstoffatome enthalten.

4. Verfahren gemäß Ansspruch 3, worin R¹ und R² Wasserstoff sind und R³ und R⁵ C₄-C₂₀ Alkyl sind.

5. Verfahren gemäß Anspruch 1, weiter umfassend mindestens einen 1,4,5,8-tetrasubstituierten Anthrachinonfarbstoff mit einem Absorptionsmaximum von 720 nm bis 850 nm mit der Formel (III) 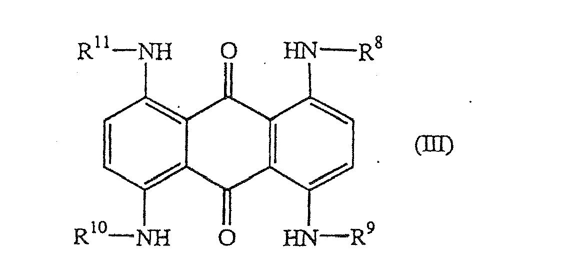 worin R⁸, R⁹, R¹⁰ und R¹¹, unabhängig voneinander, Alkyl, Aryl, Aralkyl, Heteroalkyl oder Heterocyclus sind.

6. Verfahren gemäß Anspruch 5, worin jeder Farbstoff in einer Menge von 0,01 ppm bis 2 ppm vorliegt.

7. Verfahren gemäß Anspruch 6, worin R⁸, R⁹, R¹⁰ uns R¹¹, unabhängig voneinander, Aryl oder aromatisch heterocyclisch, substituiert mit mindestens einer C₄-C₂₀ Alkylgruppe, sind.

8. Verfahren gemäß Anspruch 5, weiter umfassend mindestens einen substitutierten Anthrachinonfarbstoff mit der Formel (IV) 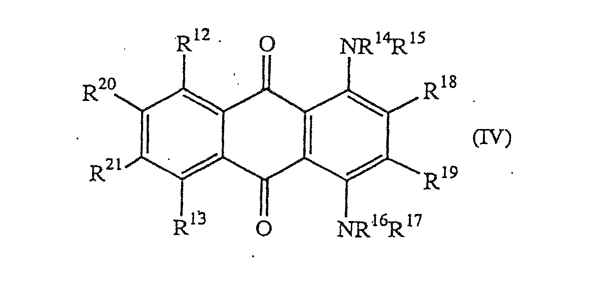 worin R¹² und R¹³, unabhängig voneinander, Wasserstoff, Hydroxy, OR²², Amino oder NR²²R²³ sind, R¹⁴ und R¹⁶, unabhängig voneinander, Alkyl, Aryl, Aralkyl, Heteroalkyl oder Heterocyclus sind, R¹⁵ und R¹⁷, unabhängig voneinander, Wasserstoff oder Alkyl sind, R¹⁸, R¹⁹, R²⁰ und R²¹, unabhängig voneinander, Cyan, Nitro oder Wasserstoff sind, mit der Maßgabe, daß mindestens zwei von R¹⁸, R¹⁹, R²⁰ und R²¹ Cyan oder Nitro sind, R²² Alkyl, Aryl, Aralkyl, Heteroalkyl, Heterocyclus oder Alkanoyl sind, R²³ Wasserstoff oder Alkyl ist, und wobei der mindestens eine substituierte Anthrachinonfarbstoff ein Absorptionsmaximum in dem Bereich von 780 nm bis 900 nm aufweist.

9. Verfahren gemäß Anspruch 8, worin R¹⁸, R¹⁹, R²⁰ und R²¹, unabhängig voneinander, Cyan oder Wasserstoff sind, R¹² und R¹³ Wasserstoff, Hydroxy oder NR²²R²³ darstellen, und R¹⁴ und R¹⁶ C₅-C₈ cyclisches Alkyl, unsubstituiertes gesättigtes acyclisches Alkyl, Aryl substituiert mit mindestens einer C₂-C₂₀ Alkylgruppe oder aromatischer Heterocyclus substituiert mit mindestens einer C₂-C₂₀ Alkylgruppe sind.

10. Verfahren gemäß Anspruch 1, worin der mindestens eine Anthrachinonfarbstoff ein Absorptionsmaximum in dem Bereich von 640 nm bis 700 nm aufweist und weiter mindestens einen Farbstoff mit einem Absorptionsmaximum von 550 nm bis 650 nm umfaßt.

## Revendications

1. Procédé de marquage d'un hydrocarbure de pétrole liquide ; ledit procédé comprenant l'addition audit hydrocarbure de pétrole liquide d'au moins un colorant d'anthraquinone présentant la formule (I) 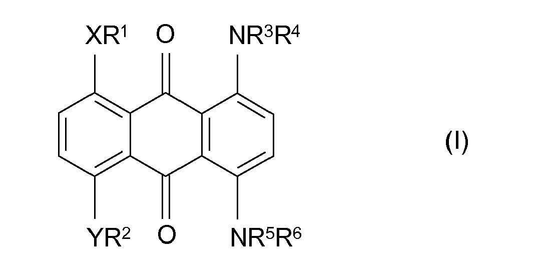 dans laquelle X est O ou S ; Y est O, NR⁷ ou S ; R¹ et R² sont indépendamment l'hydrogène, un groupe alkyle, aryle, aralkyle, hétéroalkyle, hétérocyclique ou alcanoyle ; R³ et R⁵ sont indépendamment un groupe alkyle, aryle, aralkyle, hétéroalkyle ou hétérocyclique ; R⁴ et R⁶ sont indépendamment l'hydrogène ou un groupe alkyle ; R⁷ est l'hydrogène ou un groupe alkyle ; dans lequel ledit au moins un colorant d'anthraquinone substitué n'est pas un colorant d'anthraquinone 1,4,5,8-tétrasubstitué de la formule 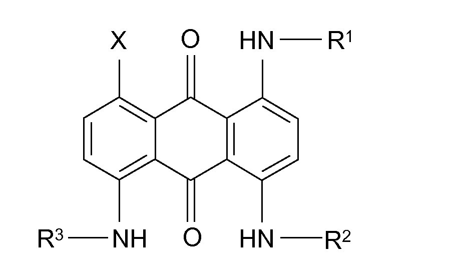 dans laquelle X est OH ; et R¹ ; R², R³ sont indépendamment un groupe alkyle, aryle, aralkyle, hétéroalkyle ou hétérocyclique ;
et dans lequel ledit au moins un colorant d'anthraquinone substitué présente un maximum d'absorption dans l'intervalle de 600 nm à 750 nm et dans lequel en plus la quantité dudit au moins un colorant d'anthraquinone substitué est inférieure à 2 ppm.

2. Procédé selon la revendication 1, dans lequel X et Y sont O et ledit au moins un colorant d'anthraquinone substitué présente un maximum d'absorption dans l'intervalle de 650 nm à 710 nm.

3. Procédé selon la revendication 2, dans lequel R¹ et R² sont l'hydrogène, un groupe alkyle ou alcanoyle ; R⁴ et R⁶ sont l'hydrogène ; et au moins deux parmi R¹, R², R³ et R⁵ contiennent au moins quatre atomes de carbone saturés chacun.

4. Procédé selon la revendication 3, dans lequel R¹ et R² sont l'hydrogène et R³ et R⁵ sont un groupe C₄-C₂₀ alkyle.

5. Procédé selon la revendication 1 comprenant de plus au moins un colorant d'anthraquinone 1,4,5,8-tétrasubstitué présentant un maximum d'absorption de 720 nm à 850 nm et présentant la formule (III) 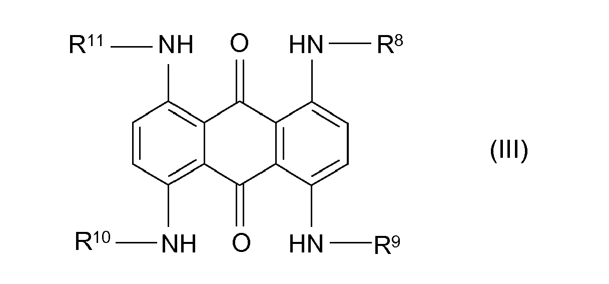 dans laquelle R⁸, R⁹, R¹⁰ et R¹¹ sont indépendamment un groupe alkyle, aryle, aralkyle, hétéroalkyle ou hétérocyclique.

6. Procédé selon la revendication 5, dans lequel chaque colorant est présent dans une quantité de 0,01 ppm à 2 ppm.

7. Procédé selon la revendication 6, dans lequel R⁸, R⁹, R¹⁰ et R¹¹ sont indépendamment un groupe aryle ou hétérocyclique aromatique substitué par au moins un groupe C₄-C₂₀ alkyle.

8. Procédé selon la revendication 5 comprenant de plus au moins un colorant d'anthraquinone substitué présentant la formule (IV) 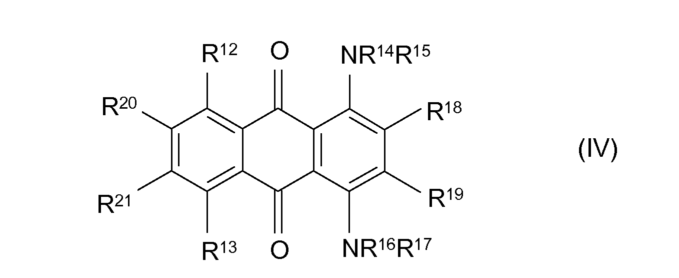 dans laquelle R¹² et R¹³ sont indépendamment l'hydrogène, un groupe hydroxy, OR²², amino ou NR²²R²³ ; R¹⁴ et R¹⁶ sont indépendamment un groupe alkyle, aryle, aralkyle, hétéroalkyle ou hétérocyclique ; R¹⁵ et R¹⁷ sont indépendamment l'hydrogène ou un groupe alkyle ; R¹⁸, R¹⁹, R²⁰ et R²¹ sont indépendamment un groupe cyano, nitro ou l'hydrogène, à condition qu'au moins deux parmi R¹⁸, R¹⁹, R²⁰ et R²¹ soient un groupe cyano ou nitro ; R²² est un groupe alkyle, aryle, aralkyle, hétéroalkyle, hétérocyclique ou alcanoyle ; R²³ est l'hydrogène ou un groupe alkyle ; et dans lequel ledit au moins un colorant d'anthraquinone substitué présente un maximum d'absorption dans l'intervalle de 780 nm à 900 nm.

9. Procédé selon la revendication 8, dans lequel R¹⁸, R¹⁹, R²⁰ et R²¹ sont indépendamment un groupe cyano ou l'hydrogène ; R¹² et R¹³ représentent l'hydrogène, un groupe hydroxy ou NR²²R²³ ; et R¹⁴ et R¹⁶ sont un groupe C₅-C₈ alkyle cyclique, alkyle acyclique saturé non substitué, aryle substitué par au moins un groupe C₂-C₂₀ alkyle ou un groupe hétérocyclique aromatique substitué par au moins un groupe C₂-C₂₀ alkyle.

10. Procédé selon la revendication 1, dans lequel ledit au moins un colorant d'anthraquinone présente un maximum d'absorption dans l'intervalle de 640 nm à 700 nm et comprenant de plus au moins un colorant présentant un maximum d'absorption de 550 nm à 650 nm.
